# EUROPEAN PATENT APPLICATION

(11) **EP 3 056 717 A1**
(43) Date of publication of application: **17.08.2016**
(21) Application number: 14851641.2
(22) Date of filing: 22.09.2014
(51) Int. Cl.: F02D 29/02, F02D 17/00

(54) **DEVICE AND METHOD FOR CONTROLLING STARTER**

(30) Priority: 11.10.2013 JP 2013213906
(71) Applicant: Hitachi Automotive Systems, Ltd., Hitachinaka-shi, Ibaraki 312-8503 (JP)
(72) Inventor: WATANABE Masanori, Tokyo 100-8280 (JP); KUNIYOSHI Hiroyasu, Tokyo 100-8280 (JP); NAKAZATO Shigenori, Hitachinaka-shi Ibaraki 312-8503 (JP); OMATA Shigehiko, Hitachinaka-shi Ibaraki 312-8503 (JP)
(74) Representative: MERH-IP Matias Erny Reichl Hoffmann Patentanwälte PartG mbB
(86) International application number: PCT/JP2014/074983
(87) International publication number: WO 2015/053065

(57) **Abstract**

Provided is a starter controller and a method capable of determining stop and restart of an engine properly corresponding to the surrounding conditions in a coasting state. A vehicle speed information acquisition unit 1 acquires vehicle speed information indicating a vehicle speed. An external environment information acquisition unit 2 acquires external environment information indicating information of an object present outside of a vehicle. A driver's request information acquisition unit 3 acquires driver's request information indicating a driver's request for the vehicle. An engine automatic stop/restart determining unit 4 determines whether to stop an engine 22 based on the vehicle speed information and the external environment information when the driver's request information indicates a deceleration request of the vehicle.

## Description

### Technical Field

The present invention relates to a starter controller and a method for stopping and restarting an engine.

### Background Art

In recent years, in automobiles, various technologies for an idle-stop system have been proposed for the purpose of an improvement of fuel efficiency and a reduction of exhaust gas, as increasing attention is paid to global warming issues. The idle-stop system automatically stops an engine positively while a vehicle is stopped for such as the case when waiting at traffic lights, and automatically restarts the engine when the engine restart is needed in such as the case where the traffic light subsequently turns to green and the vehicle starts to move again.

For example, a technology for the purpose of a proper reduction of unnecessary idle stop alone, which determines whether an own vehicle has stopped for avoiding danger with information of the environment in front of the own vehicle and information of obstacles and prohibits an automatic stop of engine when avoiding danger, is known (for example, see PTL 1).

A technology for the purpose of a reduction of an exhaust gas emission and an improvement of fuel efficiency, which calculates stop time of an engine of an own vehicle based on a position of an oncoming vehicle, vehicle speed, behavior of winker signal when the own vehicle enters an intersection for a right turn, is also known (for example, see PTL 2).

On the other hand, for the purpose of further improvement of fuel efficiency, there has recently been proposed various technologies of a coast stop system which automatically stops an engine positively from the state of vehicle coasting including the state of stepping on a brake to decelerate and then automatically restarts the engine upon restart request or similar request from a driver.

### Citation List

### Patent Literature

PTL 1: JP 2012-116299 A
PTL 2: JP 2010-216421 A

### Summary of Invention

### Technical Problem

The invention disclosed in the above-described PTL 1 and PTL 2 relates to an idle stop, that is, stop time when determining whether an engine can be stopped and stopping while the vehicle speed is completely stopped. Thus, determination of restart is not considered.

Meanwhile, when stopping an engine and then determining capability of restart in a coasting state of which the vehicle speed is not zero, there are various combinations. For example, with regard to an engine stop, the engine may be stopped, or may not be stopped. With regard to the restart, the restart may be performed, or may not be performed. Therefore, it is assumed that the technologies for the idle stop such as disclosed in the above-described PTL 1 and PTL 2 can fail to be simply deployed on the coast stop.

In view of the above-described circumstances, the present invention has been improved. It is an object of the present invention to provide a starter controller and a method capable of determining stop and restart of an engine properly corresponding to the surrounding conditions in a coasting state.

### Solution to Problem

To achieve the above-described object, an aspect of the present invention provides a configuration of a vehicle speed information acquisition unit configured to acquire vehicle speed information indicating a vehicle speed; an external environment information acquisition unit configured to acquire external environment information indicating information of an object present outside of a vehicle; a driver's request information acquisition unit configured to acquire driver's request information indicating a driver's request for the vehicle; and an engine automatic stop/restart determining unit configured to determine whether to stop an engine based on the vehicle speed information and the external environment information when the driver's request information indicates a deceleration request of the vehicle.

### Advantageous Effects of Invention

According to the present invention, it is possible to determine the stop and restart of an engine properly corresponding to the surrounding conditions. Any issues, configurations, and effects other than those described above will become apparent by reference to the following description of embodiments.

### Brief Description of Drawings

[FIG. 1] FIG. 1 illustrates a configuration of a starter controller according to a first embodiment of the present invention.
[FIG. 2] FIG. 2 is a flowchart illustrating starter control processing during coast stop for the starter controller according to the first embodiment of the present invention.
[FIG. 3] FIG. 3 is a diagram for describing a supposed scene of which an own vehicle equipped with a starter controller according to a second embodiment of the present invention approaches an intersection.
[FIG. 4] FIG. 4 is a diagram for describing a supposed scene of which an own vehicle equipped with a starter controller according to a third embodiment of the present invention approaches a crossing.
[FIG. 5] FIG. 5 is a diagram for describing a supposed scene of which an own vehicle equipped with a starter controller according to a fourth embodiment of the present invention is parked in a garage.
[FIG. 6] FIG. 6 is a diagram for describing a supposed scene of which an own vehicle equipped with a starter controller according to a fifth embodiment of the present invention approaches a congested intersection.

### Description of Embodiments

### (First Embodiment)

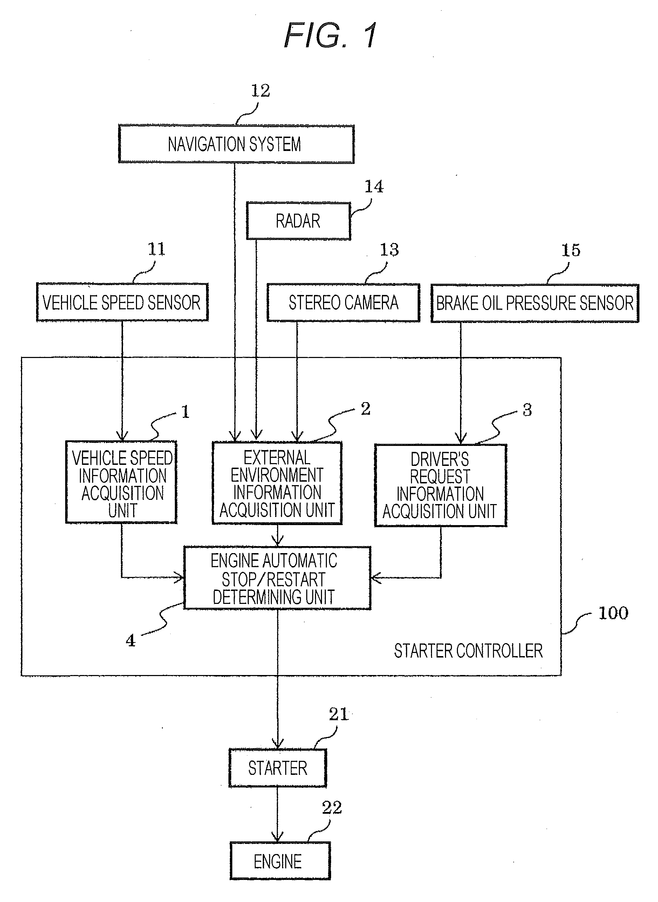

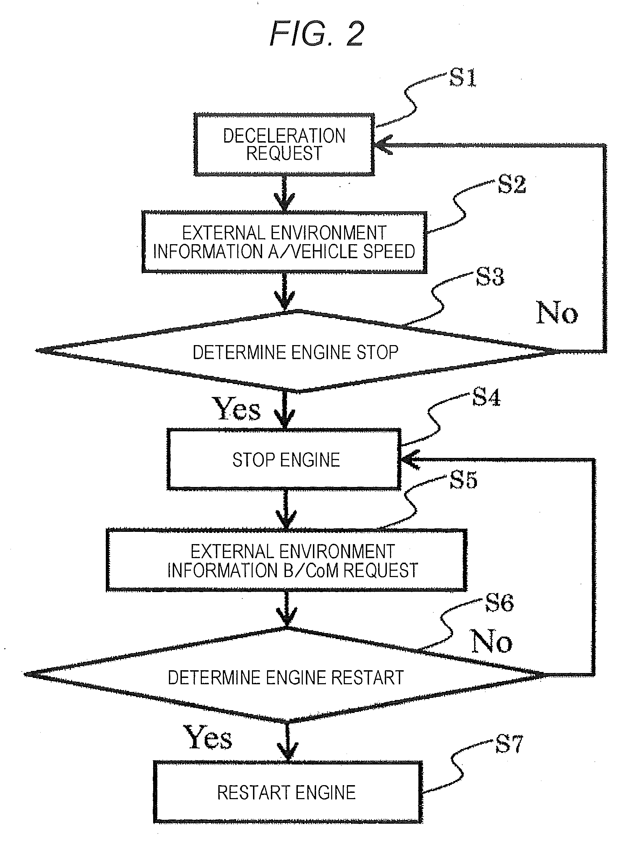

A configuration and function of a starter controller according to a first embodiment of the present invention are described hereinafter with reference to FIGs. 1 and 2.

First, the configuration of a starter controller 100 according to the first embodiment of the present invention is described with reference to FIG. 1. FIG. 1 illustrates the configuration of the starter controller 100 according to the first embodiment of the present invention.

As illustrated in FIG. 1, the starter controller 100 includes a vehicle speed information acquisition unit 1, an external environment information acquisition unit 2, a driver's request information acquisition unit 3, and an engine automatic stop/restart determining unit 4.

A vehicle speed sensor 11, a navigation system 12, a stereo camera 13, a radar 14, a brake oil pressure sensor 15, and a starter 21 are coupled to the starter controller 100. The vehicle speed sensor 11 detects vehicle speed of an own vehicle. The navigation system 12 detects a position of such as the own vehicle, and a signal and crossing around the own vehicle. The radar 14 detects a distance to an object in front of the own vehicle. The brake oil pressure sensor 15 detects brake oil pressure. The starter 21 stops and restarts an engine 22 based on results determined by the engine automatic stop/restart determining unit 4.

The vehicle speed information acquisition unit 1 acquires vehicle speed information indicating the vehicle speed from the vehicle speed sensor 11 and transmits the acquired vehicle speed information to the engine automatic stop/restart determining unit 4.

The external environment information acquisition unit 2 acquires a position and a form (shape, design, and color, or combinations thereof) of the objects present in an external environment (outside of own vehicle), or external environment information indicating a state from the navigation system 12, the stereo camera 13, and the radar 14 and transmits the acquired external environment information to the engine automatic stop/restart determining unit 4.

In the embodiment, the external environment information acquisition unit 2 transmits positional information acquired from the navigation system 12, which indicates the positions of such as the own vehicle, and the signal and the crossing around the own vehicle, as the external environment information to the engine automatic stop/restart determining unit 4. The external environment information acquisition unit 2 transmits image information acquired from the stereo camera 13, which indicates outside image, as the external environment information to the engine automatic stop/restart determining unit 4. Additionally, the external environment information acquisition unit 2 transmits distance information acquired from the radar, which indicates the distance to the object in front of the own vehicle as the external environment information to the engine automatic stop/restart determining unit 4.

The driver's request information acquisition unit 3 transmits driver's request information indicating a driver's demand for a vehicle to the engine automatic stop/restart determining unit 4.

In the embodiment, the driver's request information acquisition unit 3 acquires oil pressure information, which indicates the brake oil pressure, as the driver's request information from the brake oil pressure sensor 15.

For example, in the case where a brake is pressed down, the driver's request information indicates that a deceleration request has been issued by a driver. On the other hand, in the case where the brake is released while the engine 22 stops by an idle stop, the driver's request information indicates that a restart request for the engine 22 has been issued by the driver.

The engine automatic stop/restart determining unit 4 comprehensively determines whether to stop or restart the engine 22, based on the vehicle speed information, the external environment information, and the driver's request information. The details will be described later with reference to FIG. 2.

Next, the processes performed by the starter controller 100 according to the first embodiment of the present invention will be described with reference to FIG. 2. FIG. 2 is a flowchart illustrating starter control processing during coast stop for the starter controller 100 according to the first embodiment of the present invention.

As illustrated in FIG. 2, the deceleration request is issued by such as driver stepping on the brake while the own vehicle travels (Step S1), which causes the own vehicle to be in a coasting state of the engine 22 running by inertia.

The external environment information acquisition unit 2 acquires external environment information A from the navigation system 12, the stereo camera 13, and the radar 14 and transmits the acquired external environment information A to the engine automatic stop/restart determining unit 4 (Step 2). The vehicle speed information acquisition unit 1 acquires the vehicle speed information from the vehicle speed sensor 11 and transmits the acquired vehicle speed information to the engine automatic stop/restart determining unit 4 (Step S2).

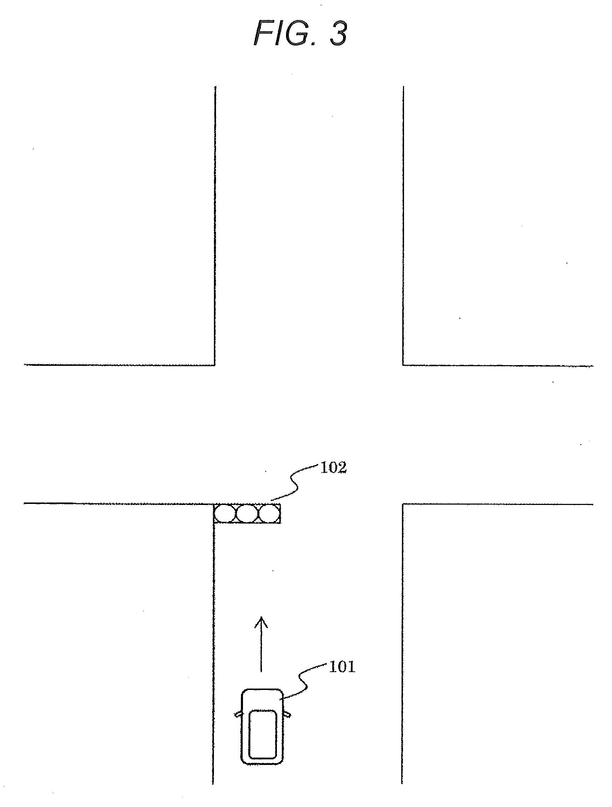

The engine automatic stop/restart determining unit 4 determines whether to stop the engine 22 in a coasting state based on the vehicle speed information of the own vehicle and the external environment information A including the positional information of the own vehicle (Step S3). For example, when the vehicle speed information indicates a positive vehicle speed having a predetermined threshold value or less, the engine automatic stop/restart determining unit 4 determines whether to stop the engine based on the external environment information A. The specific examples will be described later with reference to FIGs. 3 to 6.

The engine automatic stop/restart determining unit 4 stops the engine 22 if Yes in Step S3 (Step S4), and keeps the engine 22 running without stopping if No in Step S3.

At the time of stopping the engine 22 (Step S4), the vehicle is in a coasting state of running by inertia rather than having a speed of zero. The external environment information acquisition unit 2 acquires the external environment information A from the navigation system 12, the stereo camera 13, and the radar 14 and transmits acquired external environment information B to the engine automatic stop/restart determining unit 4 (Step 5). The driver's request information acquisition unit 3 acquires the oil pressure information from the brake oil pressure sensor 15 and transmits the driver's request information based on the acquired oil pressure information to the engine automatic stop/restart determining unit 4 (Step S5) . A CoM request shown in Step S5 of FIG. 2 indicates the restart request as the driver's request information.

Subsequently, when the driver's request information indicates the restart request, the engine automatic stop/restart determining unit 4 determines whether to restart the engine 22 based on the restart request and the external environment information B including the positional information of the own vehicle (Step S6).

The engine automatic stop/restart determining unit 4 restarts the engine 22 if Yes in Step 6 (Step S7), and keeps the engine 22 stopping if No in Step 6 (Step S4).

The external environment information A and the external environment information B may or may not be the same. The external environment information may be used for capturing to determine in real time.

As described previously, with the embodiment, it is possible to determine the stop and restart of an engine properly corresponding to the surrounding conditions. This configuration also contributes to improve fuel efficiency.

### (Embodiments for each Supposed Scene)

Next, flows of controlling an engine stop and restart performed by a starter controller 100 according to embodiments of the present invention, which is in a coasting state, will be described for some supposed scenes with reference to FIGs. 3 to 6.

### (Second Embodiment)

First, the processes performed by a starter controller 100 according to a second embodiment of the present invention will be described with reference to FIG. 3. FIG. 3 is a diagram for describing a supposed scene of which an own vehicle 101 equipped with the starter controller 100 according to the second embodiment of the present invention approaches an intersection.

The configuration of the starter controller 100 according to the embodiment is identical to that of the starter controller 100 of FIG. 1. However, as will be described later, concrete processing of the starter controller 100 is different.

As illustrated in FIG. 3, the own vehicle 101 travels in a traffic lane. A signal 102 (traffic signal) exists in the intersection. Assume that the own vehicle 101 approaches the intersection when a traffic light is red. Note that the red traffic light indicates prohibition of entry. Then, a driver steps on a brake to issue a deceleration request, which causes the own vehicle 101 to enter a coasting state.

Subsequently, the engine automatic stop/restart determining unit 4 detects a color of the traffic light with external environment information acquired from such as a navigation system 12, a radar 14, and a stereo camera 13, and determines whether an engine 22 can be stopped based on vehicle speed information of the own vehicle and a color of the traffic light.

For example, when driver's request information indicates a deceleration request of a vehicle and the vehicle speed information indicates a positive vehicle speed having a predetermined threshold value or less, the engine automatic stop/restart determining unit 4 determines whether to stop an engine based on the color of the traffic light.

In the supposed scene illustrated in FIG. 3, the engine automatic stop/restart determining unit 4 determines that the engine 22 can stop because of the red traffic light, and then stops the engine 22. Here, the own vehicle 101 also stops as long as the traffic light remains red.

Meanwhile, in the case where the traffic light turns to green, the engine automatic stop/restart determining unit 4 restarts the engine 22 based on the external environment information, of which the traffic light has turned to green, or in response to a restart request by such as the brake released by the driver. Note that the green traffic light indicates permission of entry.

Another supposed scene can be considered in FIG. 3. It is described hereinafter. The descriptions up to which the own vehicle 101 stops the engine in a coasting state, are similar to those described above, and therefore will not be further described.

It is possible that the driver fails to notice the traffic light turning to green in the case where the traffic light has turned to green while the engine 22 stops. In this case, the engine 22 is restarted based on the external environment information of which the traffic light has turned to green.

That is, the engine automatic stop/restart determining unit 4 determines based on the external environment information alone to restart the engine 22 even if no restart request from the driver is provided. According to the embodiment, therefore, conditions for which the engine 22 needs to be restarted are automatically determined.

As described previously, with the embodiment, it is possible to determine the stop and restart of an engine properly corresponding to the surrounding conditions (color of traffic light). This configuration also contributes to improve fuel efficiency.

### (Third Embodiment)

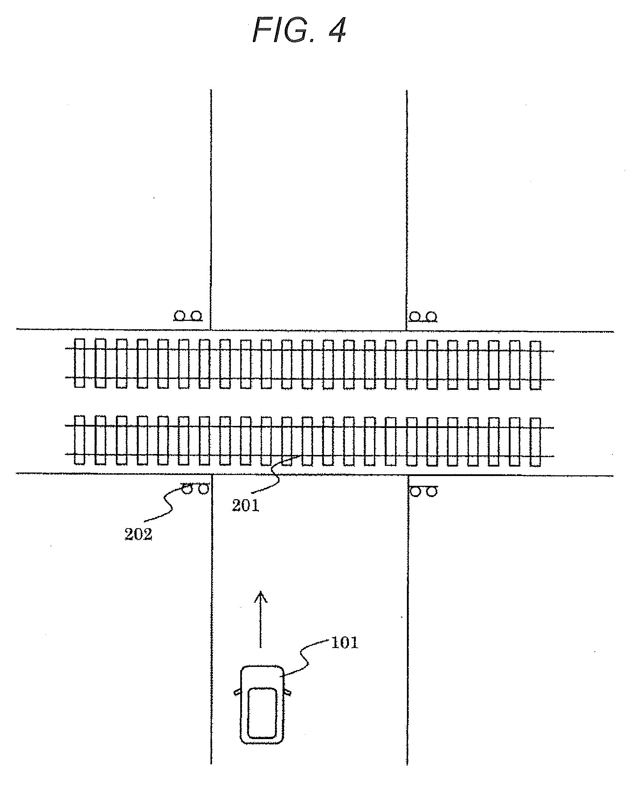

Next, the processes performed by a starter controller 100 according to a third embodiment of the present invention will be described with reference to FIG. 4. FIG. 4 is a diagram for describing a supposed scene of which an own vehicle 101 equipped with the starter controller 100 according to the third embodiment of the present invention approaches a crossing.

The configuration of the starter controller 100 according to the embodiment is identical to that of the starter controller 100 of FIG. 1. However, as will be described later, concrete processing of the starter controller 100 is different.

As illustrated in FIG. 4, the own vehicle 101 travels in a traffic lane. The crossing including a railway track 201 and a crossing gate 202 exists in front of the own vehicle 101. Then, a driver steps on a brake to issue a deceleration request, which causes the own vehicle 101 to enter a coasting state.

Subsequently, the engine automatic stop/restart determining unit 4 determines whether an engine can be stopped based on vehicle speed information and external environment information.

In this case, the engine automatic stop/restart determining unit 4 determines that an engine 22 will not stop based on the external environment information of being in front of the crossing even if a vehicle speed satisfies conditions for an engine stop. That is, the automatic stop/restart determining unit 4 does not determine to stop the engine when detecting the crossing based on the external environment information (such as geographic information of a navigation system 12) even if driver's request information indicates the deceleration request of a vehicle and the vehicle speed information indicates a positive vehicle speed having a predetermined threshold value or less.

If determination of a stop of the engine 22 is made with the vehicle speed information alone, the engine 22 stops even in cases, such as being in front of the crossing, where stopping the engine 22 causes inconvenience instead.

In the embodiment, the comprehensive determination is made with the external environment information, and accordingly it is possible to quickly travel through the crossing, for example.

As described previously, with the embodiment, it is possible to determine the stop and restart of an engine properly corresponding to the surrounding conditions (crossing). This configuration also contributes to improve fuel efficiency. Additionally, it is possible to quickly travel through the crossing.

### (Fourth Embodiment)

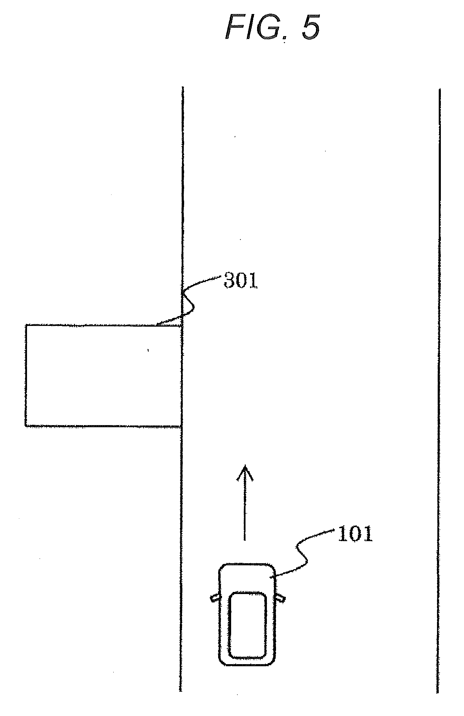

Next, the processes performed by a starter controller 100 according to a fourth embodiment of the present invention will be described with reference to FIG. 5. FIG. 5 is a diagram for describing a supposed scene of which an own vehicle 101 equipped with the starter controller 100 according to the fourth embodiment of the present invention is parked in a garage.

The configuration of the starter controller 100 according to the embodiment is identical to that of the starter controller 100 of FIG. 1. However, as will be described later, concrete processing of the starter controller 100 is different.

As illustrated in FIG. 5, the own vehicle 101 travels in a road in front of an own house. As the own vehicle 101 approaches a garage 301 of the own house, a driver steps on a brake to issue a deceleration request in order to park a vehicle in the garage 301. The own vehicle 101 enters a coasting state.

Subsequently, the engine automatic stop/restart determining unit 4 determines whether an engine 22 can be stopped based on vehicle speed information and external environment information. In this case, it is determined that an engine 22 will not stop based on the external environment information of being near the garage even if a vehicle speed satisfies conditions for stop of the engine 22. That is, the engine automatic stop/restart determining unit 4 detects a distance to the garage based on the external environment information (such as geographic information of a navigation system 12 and distance information of a radar 14) and does not determine to stop the engine when the distance to the garage is a predetermined threshold value or less, even if driver's request information indicates the deceleration request of a vehicle and the vehicle speed information indicates a positive vehicle speed having the predetermined threshold value or less.

If determination of a stop of the engine 22 is made with the vehicle speed information alone, the engine 22 stops at every vehicle turnabout near the garage. The engine 22 is needed to be restarted for moving the own vehicle 101. Therefore, in this case, it is preferable to leave the engine 22 without stopping.

In this respect, according to this embodiment, the comprehensive determination is made with the external environment information, and accordingly it is possible to control the unnecessary stop and restart of the engine 22 when not needed.

As described previously, with the embodiment, it is possible to determine the stop and restart of an engine properly corresponding to the surrounding conditions (near garage). This configuration also contributes to improve fuel efficiency.

### (Fifth Embodiment)

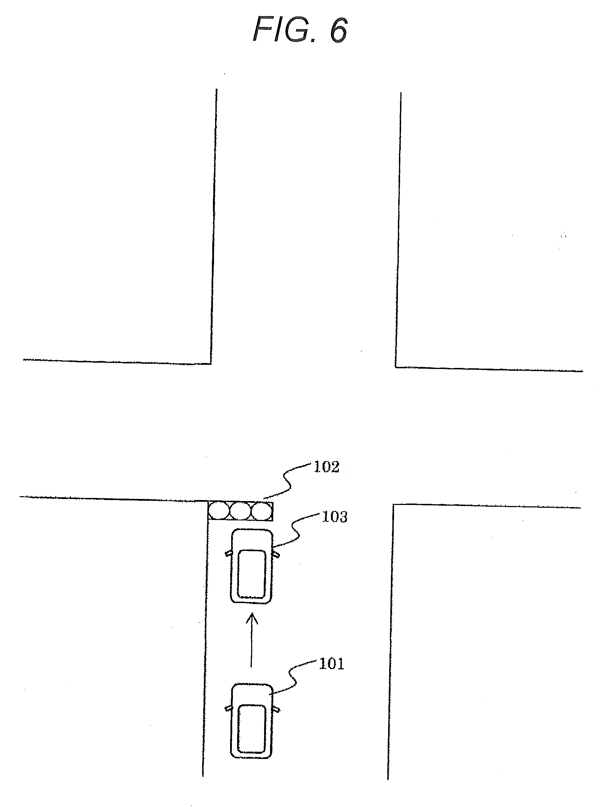

Next, the processes performed by a starter controller 100 according to a fifth embodiment of the present invention will be described with reference to FIG. 6. FIG. 6 is a diagram for describing a supposed scene of which an own vehicle 101 equipped with a starter controller 100 according to the fifth embodiment of the present invention approaches a congested intersection.

The configuration of the starter controller 100 according to the embodiment is identical to that of the starter controller 100 of FIG. 1. However, as will be described later, concrete processing of the starter controller 100 is different.

As illustrated in FIG. 6, the own vehicle 101 travels in a traffic lane. A signal 102 exists in the intersection. Assume that the own vehicle 101 approaches the intersection when a traffic light is red. Additionally, assume that there is a traffic jam near the intersection.

Then, a driver steps on a brake to issue a deceleration request, which causes the own vehicle 101 to enter a coasting state.

Subsequently, the engine automatic stop/restart determining unit 4 determines whether an engine can be stopped based on vehicle speed information and external environment information.

In this case, it is determined that an engine 22 may be stopped because of a red traffic light and during traffic jam. The engine 22 is stopped. Here, the own vehicle 101 also stops as long as the traffic light remains red.

Meanwhile, the engine automatic stop/restart determining unit 4 obtains a state of a vehicle ahead 103 stopping without moving in front of the own vehicle 101 due to the traffic jam from the external environment information (such as distance information of a radar 14) to determine to keep the engine 22 stopping without restart, even if the driver releases the brake to issue a restart request when the traffic light has turned to green.

According to the embodiment, therefore, proper determination can be made, also when it is unnecessary to restart the engine 22 because of vehicles blocking ahead during traffic jam.

As described previously, with the embodiment, it is possible to determine the stop and restart of an engine properly corresponding to the surrounding conditions (traffic jam and color of traffic light). This configuration also contributes to improve fuel efficiency.

Next, the conditions for an engine stop and restart performed by the starter controller 100 according to the second to the fifth embodiments of the present invention will be described with reference to Table 1. Table 1 illustrates a response matrix of the supposed scenes in which the starter controller 100 according to the second to the fifth embodiments of the present invention is in a coast stop.

The engine stop and restart are needed to be determined in the supposed scenes as shown in Table 1. This is because the determination of the stop and restart of the engine 22 varies depending on the supposed scene.

In other words, in a coasting state, the engine 22 may be stopped, or may not be stopped. And the engine 22 may be restarted, or may not be restarted. Accordingly, it is practical to create a map for controlling the stop and restart of the engine 22 in the supposed scenes in advance.

In Table 1, with regard to the four supposed scenes, the determination of YES/NO for the stop and restart of the engine 22 is described.

The controllers according to the present invention include a learning function and store the determination of the engine stop and restart. This ensures that various supposed scenes can be additionally stored. Consequently, accuracy of the determination of the stop and restart of the engine 22 can be further improved. The unwanted stop and restart can be reduced. The controllers according to the present invention also include a fail-safe and always function as a safety control even in case of emergency or failure such as operational error.

**[Table 1]**

| | Supposed scene | When engine is stopped | | When engine is restarted | |
|---|---|---|---|---|---|
| | | Brake state | Engine state | Brake state | Engine state |
| 1 | Normal operation | Operate (press) | Stop | Release (disengage) | Start |
| 2 | In front of crossing Parking in garage | Operate (press) | Not stop | | |
| 3 | Case of red traffic light turns to green | Operate (press) | Stop | Operate (press) Keep released | Start Start |
| 4 | During traffic jam or vehicle ahead blocking | Operate (press) | Stop | Release (disengage) | Not start |

It is noted that the present invention is not limited to the foregoing embodiments but includes a variety of modifications. The foregoing embodiments have been described for the purpose of clarity. The invention is not necessarily limited to those including all the features described. A part of the features of one embodiment can be replaced by a feature of another embodiment. Further, a feature of another embodiment can also be added to the features of one embodiment. As for the features of each of the embodiments, another feature can be added to the features thereof, or a part of the features thereof can be deleted or replaced by another feature.

### Reference Signs List

- 1: vehicle speed information acquisition unit
- 2: external environment information acquisition unit
- 3: driver's request information acquisition unit
- 4: engine automatic stop/restart determining unit
- 11: vehicle speed sensor
- 12: navigation system
- 13: stereo camera
- 14: radar
- 15: brake oil pressure sensor
- 21: starter
- 22: engine
- 100: starter controller
- 101: own vehicle
- 102: signal
- 103: vehicle ahead
- 201: railway track
- 202: crossing gate
- 301: garage

## Claims

1. A starter controller comprising:
a vehicle speed information acquisition unit configured to acquire vehicle speed information indicating a vehicle speed;
an external environment information acquisition unit configured to acquire external environment information indicating information of an object present outside of a vehicle;
a driver's request information acquisition unit configured to acquire driver's request information indicating a driver's request for the vehicle; and
an engine automatic stop/restart determining unit configured to determine whether to stop an engine based on the vehicle speed information and the external environment information when the driver's request information indicates a deceleration request of the vehicle.

2. The starter controller according to claim 1, wherein
the engine automatic stop/restart determining unit is configured to determine whether to stop the engine based on the external environment information when the driver's request information indicates the deceleration request of the vehicle and when the vehicle speed information indicates a positive vehicle speed having a value equal to or less than a predetermined threshold value.

3. The starter controller according to claim 2, wherein
the engine automatic stop/restart determining unit is configured to
detect a color of a traffic light based on the external environment information and
determine to stop the engine when the driver's request information indicates the deceleration request of the vehicle, when the vehicle speed information indicates the positive vehicle speed having a value equal to or less than the predetermined threshold value, and when the color of the traffic light comprises a color referring to prohibition of entry.

4. The starter controller according to claim 2, wherein
the engine automatic stop/restart determining unit is configured to detect a crossing based on the external environment information and
configured not to determine to stop the engine when the crossing is detected, when the driver's request information indicates the deceleration request of the vehicle, and when the vehicle speed information indicates the positive vehicle speed having a value equal to or less than the predetermined threshold value.

5. The starter controller according to claim 2, wherein
the engine automatic stop/restart determining unit is configured to detect a distance to a garage based on the external environment information and
configured not to determine to stop the engine when the distance to the garage has a value equal to or less than a predetermined threshold value, when the driver's request information indicates the deceleration request of the vehicle, and when the vehicle speed information indicates the positive vehicle speed having a value equal to or less than the predetermined threshold value.

6. The starter controller according to claim 1, wherein
the engine automatic stop/restart determining unit is configured to determine whether to restart the engine based on a restart request and the external environment information when the driver's request information indicates the restart request of the engine.

7. The starter controller according to claim 6, wherein
the engine automatic stop/restart determining unit is configured to
detect the color of the traffic light based on the external environment information and
determine to restart the engine when the color of the traffic light comprises the color referring to permission of entry.

8. The starter controller according to claim 7, wherein
the engine automatic stop/restart determining unit is configured to
detect a traffic jam based on the external environment information and
determine not to restart the engine when the traffic jam is detected, when the driver's request information indicates the restart request of the engine, and when the color of the traffic light comprises the color referring to the permission of entry.

9. A method for controlling a starter, the method comprising:
a vehicle speed information acquiring step of acquiring vehicle speed information indicating a vehicle speed;
an external environment information acquiring step of acquiring external environment information indicating information of an object present outside of a vehicle;
a driver's request information acquiring step of acquiring driver's request information indicating a driver's request for the vehicle; and
an engine automatic stop/restart determining step of determining whether to stop an engine based on the vehicle speed information and the external environment information when the driver's request information indicates a deceleration request of the vehicle.
